(19) Europäisches Patentamt
European Patent Office
Office européen des brevets

(11) Veröffentlichungsnummer : **0 090 221**
**B1**

(12) # EUROPÄISCHE PATENTSCHRIFT

(45) Veröffentlichungstag der Patentschrift : **30.12.86**

(51) Int. Cl.⁴ : **B 60 C 5/10**

(21) Anmeldenummer : **83102381.7**

(22) Anmeldetag : **11.03.83**

(54) **Schlauchstück für Luftreifen.**

(30) Priorität : **23.03.82 DE 3210594**

(43) Veröffentlichungstag der Anmeldung : **05.10.83 Patentblatt 83/40**

(45) Bekanntmachung des Hinweises auf die Patenterteilung : **30.12.86 Patentblatt 86/52**

(84) Benannte Vertragsstaaten :
**BE DE FR GB IT NL**

(56) Entgegenhaltungen :
**DE-A- 2 832 546**
**FR-A- 631 322**
**US-A- 2 198 008**
**US-A- 2 729 618**
**US-A- 4 324 280**

(73) Patentinhaber : **BAYER AG**
**Konzernverwaltung RP Patentabteilung**
**D-5090 Leverkusen 1 Bayerwerk (DE)**

(72) Erfinder : **Quiring, Bernd, Dr.**
**Albrecht-Haushofer-Strasse 2**
**D-5090 Leverkusen (DE)**
Erfinder : **Niederdellmann, Georg, Dr.**
**Heinestrasse 6**
**D-4047 Dormagen (DE)**

**EP 0 090 221 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen aufblasbaren Schlauch für Luftreifen, ausgebildet als Schlauchstück mit beidseitig dichten Enden, wobei die Länge des Schlauchstückes mindestens gleich dem Umfang der Radfelge ist.

Schläuche für Luftreifen sind normalerweise torusförmig. Immer dann, wenn das Rad an einer Gabel befestigt ist, beispielsweise bei Fahrrädern, muß es ausgebaut werden, wenn ein Schlauch in den Reifen eingelegt oder entnommen werden soll. Die Länge eines solchen Schlauches ebenso wie sein Durchmesser müssen auf den Reifendurchmesser abgestimmt sein ; entsprechend der verschiedenen Reifen gibt es eine vergleichbar große Zahl von Schläuchen.

In der DE-OS 2 832 546 ist statt eines torusförmigen Schlauches ein Luftschlauch vorgeschlagen, der ohne Radausbau montiert werden kann und der mit einem Minimum an Verfahrensschritten herstellbar ist. Der Luftschlauch ist dabei radial in Umfangsrichtung geteilt und mit zwei freien Enden versehen, wobei die Enden verschlossen und beim Einbau in gegenseitige Berührung bringbar sind. Auch ein Herstellungsverfahren ist in dieser Schrift für solche Schläuche angegeben. Der Schlauch besteht aus Gummi ; bei der Herstellung ist die Kautschuktechnologie zu beachten, insbesondere dürfen die frisch geformten Schlauchwände vor der Vulkanisation nicht miteinander in Berührung kommen, weil sie sofort zusammenkleben würden.

Auch in den DE-PS'en 739 848, 886 698, GB 103 471, NL 7711463 sind schon ähnliche Schlauchstücke für Luftreifen beschrieben. Bei allen bekannten Schläuchen bzw. Schlauchstücken ist durch den Reifentyp ihre Länge und ihr Durchmesser in engen Grenzen festgelegt, da eine Faltenbildung im Rad unbedingt vermieden werden muß. Die Lebensdauer eines Gummireifens wird andernfalls durch Knickermüdung und Reibung sehr reduziert.

Bei allen bekannten Schlauchstücken sind die Gebrauchseigenschaften und die Lebensdauer Schwachpunkte. Auch wenn die Schlauchlänge genau auf den Felgenumfang abgestimmt ist oder eine besondere Verbindung der Schlauchstückenden vorgesehen ist; kann in der Regel nicht mit ausreichender Sicherheit eine Faltenbildung im Reifen ausgeschlossen werden. Aufblasbare Schlauchstücke für Luftreifen haben sich daher trotz ihrer Vorteile bei der Herstellung und bei der Montage gegenüber torusförmigen Schläuchen nicht durchsetzen können.

Aufgabe der Erfindung ist ein aufblasbares Schlauchstück für Luftreifen mit größerer Haltbarkeit und vielseitiger Verwendbarkeit.

Die Aufgabe wird dadurch gelöst, daß der Schlauch aus einem thermoplastischen Elastomeren mit einer Shore A Härte von höchstens 96 (nach DIN 53 505) und einer Zugfestigkeit von mindestens 25 MPa (nach DIN 53 504) besteht. Besonders geeignete Materialien sind in den Unteransprüchen beschrieben.

Erfindungsgegenstand ist ein aufblasbarer Schlauch für Luftreifen, ausgebildet als Schlauchstück mit beidseitig dichten. Enden, wobei die Länge des Schlauchstückes mindestens gleich dem Umfang der Radfelge ist, dadurch gekennzeichnet, daß der Schlauch aus einem thermoplastischen Elastomeren mit einer Shore A Härte (nach DIN 53 505) von höchstens 96 und einer Zugfestigkeit (nach DIN 53 504) von mindestens 25 MPa besteht und im Falle eines thermoplastischen Polyurethan- oder Polyurethanharnstoff-Elastomeren aufgebaut ist aus

a) mindestens einer langkettigen Verbindung mit im Mittel mindestens 1,8 zerewitinoffaktiven Wasserstoffatomen und einem Molekulargewicht von 400 bis 10 000,

b) mindestens einer zwei zerewitinoffaktive Wasserstoffatome enthaltenden Verbindung vom Molekulargewicht 32 bis 400 und/oder Wasser und

c) mindestens einem aliphatischen, cycloaliphatischen, araliphatischen, aromatischen und/oder heterocyclischen Diisocyanat,

wobei das Verhältnis der NCO-Gruppen zu den zerewitinoffaktiven Wasserstoffatomen zwischen 0,97 und 1,03 liegt.

Wenn das Schlauchstück erfindungsgemäß aus bestimmten thermoplastischen Elastomeren hergestellt wird, ergeben sich unerwartete vorteilhafte Gebrauchseigenschaften. Es zeigt sich, daß Falten im eingebauten Schlauchstück die Lebensdauer im normalen Betrieb nicht verschlechtern, so daß die vereinfachte Reifenmontage voll zum Tragen kommt. Auch die Schlauchstückgröße kann vom optimalen Wert abweichen. Es ist möglich, ein Schlauchstück für ein 28" Rad auch in ein 18" Rad einzubauen. Ein Schlauchstück mit einem größeren Durchmesser kann auch im Reifen mit einem kleineren Durchmesser eingebaut werden. Die Montage erfordert keinen Spezialisten.

Die erfindungsgemäß zu verwendenden Materialien haben eine so hohe Festigkeit, eine im Verhältnis zum Gummi so geringe Gebrauchsermüdung, dazu selbst im Vergleich zu Butylkautschuk so niedrige Gasdurchlässigkeit, daß im Vergleich zum Stand der Technik sehr leichte Schlauchstücke mit wesentlich niedriger Wandstärke bei mindestens gleicher Gebrauchstauglichkeit möglich sind. So zeigt eine Schlauchwand aus Butylkautschuk auch unbelastet schon nach etwa 400 000 Knickungen im Bally Flexometer bei Raumtemperatur eine deutlich sichtbare Porosität an der Knickstelle (unter Last ermüdet Gummi wesentlich schneller). Schlauchwände aus den erfindungsgemäß zu verwendenden Materialien sind nach gleicher Belastung nicht erkennbar verändert. Die Durchstoßfestigkeit der erfindungsgemäß besonders bevorzugten Materialien ist höher als beim Butylkautschuk (Zugfestigkeit mindestens 25 MPa,

im Vergleich dazu bei Butylkautschuk ca. 10 MPa ; Weiterreißfähigkeit mindestens 40 N/mm, im Vergleich dazu bei Butylkautschuk ca. 25 N/mm).

In der US-PS 4 324 280 sind Schlauchmaterialien aus Polyurethan beschrieben, die einen Überschuß an Isocyanatgruppen enthalten, die im fertigen Schlauch zu einer chemischen Nachvernetzung führen. Danach sind Verhältnisse von NCO-Gruppen zu Zerewitinoff-aktiven Wasserstoffatomen unter 1,05 für Schläuche nicht mehr geeignet. Demgegenüber sind erfindungsgemäß thermoplastische Elastomere besonders geeignet, die nicht chemisch nachvernetzend sind. Besonders geeignet ist ein Verhältnis von 0,97 bis 1,03. Neben einer höheren Weiterreißfestigkeit sind die erfindungsgemäßen Schlauchmaterialien besonders geeignet, weil im Falle einer Panne eine einfache Reparatur unter Verwendung von reinem Lösungsmittel möglich ist. Außerdem sind diese Materialien ohne chemische Aufarbeitung rezyklisierbar.

Überraschend ist auch, daß selbst die Verletzung der Schlauchwand durch eine Nagelspitze oder eine kleine Glasscherbe zu wesentlich kleineren Löchern im erfindungsgemäß zu verwendenden Material als im Butylkautschuk führt. Dadurch ist es im Unterschied zum Stand der Technik oft möglich, die Fahrt mit einem verletzten Schlauch noch ein Stück fortzusetzen, ehe der Luftdruck im Reifen unter die für den Betrieb erforderliche Mindesthöhe absinkt.

Die Enden des Schlauchstücks müssen mindestens aneinanderstoßen ; eine Überlappung ist günstig. Die Überlappungslänge ist nicht kritisch. Bei dem Schlauchstück zeigt sich, daß das elastischplastische Material die Schlauchenden hinreichend fixieren kann, auch bei hohen Geschwindigkeiten und Belastungen verschieben sich die Schlauchenden nicht. Dies überrascht hinsichtlich einer bekannten Eigenschaft thermoplastischer Polyurethane und Polyetherblockcopolyamide, die beispielsweise für Skischuhschalen bevorzugt werden, weil sie sehr leicht und reproduzierbar aus der Skibindung gleiten.

Neben möglichen Falten in Radumfangsrichtung sind auch mögliche Falten in Schlauchumfangsrichtung nicht kritisch. Es hat sich gezeigt, daß man einen Schlauchstückdurchmesser für verschieden dicke Reifen einsetzen kann.

Als thermoplastische Elastomere mit der geforderten Shore A Härte und der Zugfestigkeit kommen in Frage ; (Co)Polymerisate von Dienen wie SBS-Copolymerisate, Polyetherester, Polyetheramide, Polyesteramide, Polyetheresteramide, Ethylenvinylacetatcopolymere, modifiziertes Polyethylen und Polypropylen, Silikonkautschuk, Polyurethan, cycloaliphatische, aliphatische und aromatische Polyurethanharnstoffe. Bevorzugte Materialien sind Polymere, die Ether-, Carbonsäure-Ester-, Amid-, Urethan- und/oder Harnstoffgruppen enthalten. Besonders bevorzugte Materialien sind thermoplastische Polyurethane und Polyurethanharnstoffe.

Als bevorzugte Werkstoffe seien beispielhaft genannt : Polyetherester wie sie z. B. aus Polyoxytetramethylenglykol, Polyoxyethylenglykol und/oder Polyoxypropylenglykol, Ethandiol, Butandiol und/oder Hexandiol usw., Phthal-, Isophthal-, Terephthalsäure, die gegebenenfalls hydriert sein können, aufgebaut sind. Ebenso kommen Blockpolyamide in Frage, die z. B. aus Polyamidhartsegmenten und Weichsegmenten wie Polyethern wie Polyoxyethylenglykol, Polyoxypropylenglykol, Polyoxytetramethylenglykol oder deren Mischungen, Adipinsäurepolyestern, amidgruppenhaltigen Ethern und/oder Estern aufgebaut sind und z. B. in den DE-OS 2 632 120, 2 523 991, US-Patent 4 129 715 beschrieben wurden.

Zur Herstellung der Schlauchstücke besonders bevorzugte Materialien sind thermoplastische Polyurethane und Polyurethanharnstoffe, die aufgebaut sind aus

a) einer oder mehreren langkettigen Verbindungen mit im Mittel mindestens 1,8 zerewitinoffaktiven Gruppen, z. B. einem Diol, gegebenenfalls auch Aminoalkohol oder Diamin, mit einem Molekulargewicht zwischen 400 und 10 000, vorzugsweise zwischen 450 und 6 000,

b) einer oder mehreren etwa zwei zerewitinoffaktive Gruppen enthaltenden Verbindung(en) mit einem Molekulargewicht zwischen 32 und 400, bevorzugt zwischen 60 und 350 und/oder Wasser und

c) einem oder mehreren aliphatischen, cycloaliphatischen, araliphatischen, aromatischen und/oder heterocyclischen Diisocyanaten.

Als langkettige Verbindung a) mit mindestens 1,8 zerewitinoffaktiven Gruppen kommen neben Aminogruppen, Thiolgruppen und/oder Carboxylgruppen aufweisenden Verbindungen vorzugsweise Hydroxylendgruppen enthaltende Verbindungen, insbesondere mit etwa zwei zerewitinoffaktiven Gruppen, wie Polyester, Polyether, Polythioether, Polyacetale, Polycarbonate, Polyesteramide in Frage.

Beispielhaft für Hydroxylgruppen aufweisende Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren,

gegebenenfalls in Mischung mit monomeren ungesättigten Fettsäuren, wie ölsäure ; Terephthalsäuredimethylester und Terephthalsäure-bis-glykolester.

Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

Der Anteil carbocyclischer Verbindungen sowohl in der Säure- als auch in der Glykolkomponente sollte dabei 30 Gew.-% nicht übersteigen.

Auch die erfindungsgemäß in Frage kommenden, mindestens 1,8, in der Regel zwei bis acht, vorzugsweise etwa zwei Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak, oder Amine, z. B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß anteilig in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischether, Polythioetherester oder Polythioetheresteramide.

Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751 ; DE-Offenlegungsschrift 2 605 024).

Zu den Polyesteramiden zählen z. B. die aus mehrwertigen, besonders difunktionellen gesättigten oder ungesättigten Carbonsäuren, Glykolen und mehr-, bevorzugt zweiwertigen gesättigten oder ungesättigten Aminoalkoholen und Aminen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehyd-Harze sind erfindungsgemäß einsetzbar.

Die genannten Polyhydroxylverbindungen können vor ihrer Verwendung im Polyisocyanat-Polyadditionsverfahren noch in der verschiedensten Weise modifiziert werden : So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyether- und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z. B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Prepolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder

Hydrazidgruppen werden in der DE-Offenlegungsschrift 1 694 152 (US-Patentschrift 3 625 871) beschrieben.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den obengenannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293, und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-Patentschriften 3 383 351, 3 304 273, 3 523 093, 3 110 695 ; DE-Auslegeschrift 1 152 536) oder Polycarbonatpolyolen (DE-Patentschrift 1 769 7-95 ; US-Patentschrift 3 637 909) erhalten werden, sind für das erfindungsgemäße Verfahren geeignet. Bei Verwendung von Polyetherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)Acrylnitril, (Meth)Acrylamid oder OH-funktionellen (Meth)Acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746), können mit besonderem Vorteil in Kombination mit mineralischen Füllstoffen eingesetzt werden.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens 1,8 gegenüber Isocyanaten reaktionsfähigen Wasserstoffatomen mit einem Mokekulargewicht von 400 bis 10 000, z. B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Als etwa zwei zerewitinoffaktive Gruppen enthaltende Verbindungen b) (sogenannte Kettenverlängerer) mit Molekulargewichten zwischen 32 und 400 kommen in Frage : Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise etwa 2, gegenüber Isocyanaten reaktionsfähige Wasserstoffatome auf. Auch Wasser kann als Kettenverlängerer eingesetzt werden.

Auch in diesem Fall können Mischungen von verschiedenen Verbindungen mit mindestens 2 gegenüber Isocyanaten reaktionsfähigen Wasserstoffatomen mit einem Molekulargewicht von 32 bis 400 sowie Wasser verwendet werden.

Als Beispiele für derartige Verbindungen seien genannt :

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Hydrochinon-dihydroxyethylether, Ethanolamin, Diethanolamin, N-Methyldiethanolamin und 3-Aminopropanol.

Erfindungsgemäß geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (« Isophorondiamin »), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine Gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z. B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure ; Semicarbazido-alkylen-hydrazide wie z. B. β-Semicarbazidopropionsäurehydrazid (DE-Offenlegungsschrift 1 770 591), Semicarbazido-alkylencarbazinester wie z. B. 2-Semicarbazidoethylcarbazinester (DE-Offenlegungsschrift 1 918 504) oder auch Amino-semicarbazid-Verbindungen wie z. B.

β-Aminoethyl-semicarbazidocarbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894 ; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Ethergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-phenylendiamine (DE-Offenlegungsschriften 2 001 772, 2 025 896 und 2 065 869), 3,3'-Dichlor-4,4'-diamino-diphenylmethan, Toluylendiamin, Diaminodiphenylmethan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Weitere erfindungsgemäß geeignete niedermolekulare Polyole vom Molekulargewicht bis 400 sind Esterdiole der allgemeinen Formeln

$$HO-(CH_2)_Y-CO-O-(CH_2)_X-OH \text{ und}$$

$$HO-(CH_2)_x-O-CO-R-CO-O-(CH_2)_x-OH,$$

in denen

R einen Alkylenrest mit 1 bis 10, vorzugsweise 2 bis 6, C-Atomen bzw. einen Cycloalkylen- oder Arylenrest mit 6 bis 10 C-Atomen,

x 2 bis 6 und

Y 3 bis 5

bedeuten,

z. B. δ-Hydroxybutyl-ε-hydroxy-capronsäureester, -Hydroxyhexyl-γ-hydroxybuttersäureester, Adipinsäure-bis-(β-hydroxyethyl) ester und Terephthalsäure-bis(β-hydroxyethyl) ester ;

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butendiol-1,4 bzw. dessen Alkoxylierungsprodukte.

Als im wesentlichen difunktionelles Isocyanat c) kommen aliphatische, cycloaliphatische, araliphatische, aromatische und heterocyclische Polyisocyanate, wie sie z. B. von W. Siefken in Justus Liebigs Annalen der Chemie, 562, Seiten 75-136, beschrieben sind, beispielsweise solche der Formel

$$Q\ (NCO)_n$$

in der

n 2 bis 4, vorzugsweise 2,

und

Q einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einen aromatischen Kohlenwasserstoffrest mit 6 bis 15, vorzugsweise 6 bis 13, C-Atomen, oder einen araliphatischen Kohlenwasserstoffrest mit 8 bis 15, vorzugsweise 8 bis 13, C-Atomen,

bedeuten,

z. B. Ethylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanato-methyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, am aromatischen Kern durch eine oder mehrere Alkylgruppen mit 1 bis 3 C-Atomen substituiertes 2,4- und 2,6-Toluylen-diisocyanat sowie an den aromatischen Kernen durch eine oder mehrere Alkylgruppen mit 1 bis 3 C-Atomen substituiertes 4,4'- und 2,4'-Diisocyanatodiphenylmethan und substituiertes Diphenylendiisocyanat.

Die Komponenten a), b) und c), aus denen die für die erfindungsgemäßen Schlauchstücke besonders

bevorzugten Materialien hergestellt werden, können anteilig auch mono- und höherfunktionelle Produkte enthalten. Wesentlich ist jedoch, daß die daraus hergestellten Polyurethane bzw. Polyurethanharnstoffe thermoplastisch verarbeitbar sind, eine Shore A Härte von nicht mehr als 96 und eine Zugfestigkeit von mindestens 25 MPa haben.

Erfindungsgemäß ganz besonders bevorzugt sind Polyurethane bzw. Polyurethanharnstoffe, die aufgebaut sind aus

a) einem oder mehreren aus Oxyethylen-, Oxypropylen- und/oder Oxybutyleneinheiten aufgebauten Polyethern und/oder einem oder mehreren Polyestern, deren Säurekomponente zu mindestens 50 Mol-% aus Adipinsäure, Glutarsäure, Bernsteinsäure, und/oder Azelainsäure besteht und deren Glykolkomponente zu mehr als 50 Mol-% gegebenenfalls substituiertes Ethandiol, Propandiol, Butandiol, Pentandiol, Neopentylglykol und/oder Hexandiol darstellt und/oder einem Polycarbonat wie Hexandiolpolycarbonat,

b) einem Kettenverlängerer, der im wesentlichen aus Ethylenglykol, Butandiol-(1,4), Hexandiol-(1,6), 1,4-Bishydroxymethylcyclohexan, Hydrochinondihydroxyethylether, Diethylenglykol und Homologe, Dipropylenglykol und höhere Homologe, Wasser, 1-Aminomethyl-3-amino-1, 5,5-trimethylcyclohexan (= Isophorondiamin) und/oder gegebenenfalls substituiertem Diaminodicyclohexylmethan und

c) gegebenenfalls substituiertes Diphenylmethandiisocyanat, Toluylendiisocyanat und/oder Hexamethylendiisocyanat. In Verbindung mit cycloaliphatischem Diamin können die ganz besonders bevorzugten Polyurethanharnstoffe auch Diisocyanatodicyclohexylmethan (gegebenenfalls substituiert) und/oder Isophorondiisocyanat enthalten.

Die erfindungsgemäß bevorzugten Schlauchmaterialien können Farbstoffe, Pigmente, andere Zuschlagstoffe wie Füll- und Verstärkungsmittel, z. B. auch andere Thermoplasten und Fasern sowie Gleitmittel enthalten. Dabei sollte der Gleitmittelanteil höchstens dann 1 Gew.-% übersteigen, wenn es chemisch an das Polymere gebunden ist.

Die thermoplastischen Materialien, die zur Herstellung der erfindungsgemäßen Schlauchstücke bevorzugt werden, sind an sich bekannt. Sie zeichnen sich durch hohe Festigkeit, einen hohen Weiterreißwiderstand und gute Beständigkeit gegen Abrieb aus.

Die für das Schlauchstück besonders geeigneten Materialien ermöglichen gegenüber der Kautschuktechnologie eine einfache Herstellung des Schlauchstücks. Die Schläuche können Längsnähte enthalten, bevorzugt sind sie längsnahtlos. Die Enden können verschweißt oder geklebt werden. Das Schlauchventil kann vorteilhafterweise an einer Stelle eingebaut werden, wo sich die Schlauchenden überlappen. Da es verkommen kann, daß der Mantel eines Reifens verhältnismäßig viel Spiel auf der Felge hat, ist es — wie auch beim torusförmigen Schlauch — möglich, daß der Schlauch bei Unachtsamkeit beim Aufpumpen den Mantel an einer Stelle aus der Felge drückt. Durch die Ventilverschraubung wird der Mantel gerade in dem kritischen Überlappungsbereich auf die Felge geklemmt.

Wenn ein solcher Schlauch beschädigt ist, kann er oft ohne Schwierigkeit in einen vollwertigen, etwas kürzeren Schlauch der erfindungsgemäßen Art umgearbeitet werden. Es muß lediglich das fehlerhafte Schlauchstück herausgeschnitten und das Ende verklebt oder verschweißt werden. Erfindungsgemäße Schläuche können auch aus konventionellen Schläuchen hergestellt werden, wenn sie aufgeschnitten und an den Enden verklebt oder verschweißt werden.

Schlauchstücke aus thermoplastischen Elastomeren können leicht geflickt werden. Da die Oberfläche mit einem Lösungsmittel wie z. B Dimethylformamid leicht angelöst werden kann, bedarf es keines weiteren Klebstoffs zum Aufkleben eines Flickens.

Die durch Überlappung der Schlauchenden bedingte Unwucht spielt nur eine geringe Rolle. Sie braucht nur bei Fahrzeugen für hohe Geschwindigkeiten durch entsprechende Gegengewichte ausgeglichen zu werden.

Der Schlauchdurchmesser ist vorzugsweise im aufgeblasenen Zustand größer als der innere Durchmesser des Reifenmantels.

In der Regel liegt die Wanddicke der Schlauchstücke über 100 µm.

Die Schläuche müssen weder von außen noch von innen gepudert werden.

Besonders bevorzugt ist die Verwendung der Schlauchstücke in Reifen für Fahrräder mit und ohne Hilfsmotor.

In der Zeichnung ist ein Schlauchstück beispielhaft dargestellt:

Aus einem Endlosschlauch von 3 cm Durchmesser ist ein Schlauchstück 1 von einer Länge von 240 cm abgetrennt. An beiden Seiten 2, 3 ist das Schlauchstück 1 dicht verschlossen (verschweißt). Der aufblasbare Bereich des Schlauchstückes ist 232 cm lang. Wird ein solcher Schlauch in ein 28"-Fahrradrad eingelegt (zum Ein- und Ausbau braucht das Rad nicht demontiert zu werden), so überlappen sich die aufblasbaren Bereiche des Schlauches, was aber zu keiner störenden Unwucht führt.

Bei Versuchen wurden auf ein Ende 3 beidseitig klebende, mit einer Folie zunächst geschützte Klebeblättchen 4 aufgebracht. Es kann damit der Schlauch im Mantel (reversibel) zusammengehalten und zusätzlich gesichert werden. Auch Druckknöpfe könnten eine solche Lagesicherung bewirken. Es hat sich jedoch gezeigt, daß solche Verbindungen in vielen Fällen unnötig sind. Über das Ventil 5 kann der Schlauch aufgeblasen werden.

Die Erfindung ist im folgenden weiter beispielhaft erläutert.

Beispiel 1

In einem Extruder mit Dreizonenschnecke mit L : D = 20 und einem Wellendurchmesser von 30 mm, einer Kompression von 3, mit ringförmiger Foliendüse und Senkrechtabzug wird unter den in Tabelle 1 angegebenen Bedingungen ein thermoplastisches Polyurethan, das aufgebaut ist aus einem Adipinsäurebutandiolpolyester mit einem Durchschnittsmolekulargewicht von ca. 2200, Butandiol-(1,4) und technischem 4,4'-Diisocyanatodiphenylmethan (NCO/OH-Verhältnis = 1,00) mit einer Shore A Härte von 85 und einer Zugfestigkeit von 38 MPa zu einem Schlauch mit einem Durchmesser von 35 mm extrudiert. Der Schlauch wird mit Stütz- und Kühlluft auf ca. 40 bis 50 °C gebracht, mit Hilfe von 2 angetriebenen Abquetschwalzen zusammengepreßt und aufgewickelt.

Von der Rolle werden ca. 2,40 m lange Stücke abgeschnitten, ca. 150 mm von einem Ende Entfernt wird ein kreisrundes Loch mit einem Durchmesser von 7 mm in die Schlauchwand gebohrt. Durch dieses Loch wird von innen das am Fuß mit Dimethylformamid befeuchtete Ventil geschoben. Von oben wird ein Kreisring aus dem gleichen Material mit einem Durchmesser von ca. 30 mm, der ebenfalls in der Mitte eine 7 mm Bohrung hat, über das Ventil auf den an dieser Stelle mit Dimethylformamid befeuchteten Schlauch geschoben und mit dem Daumen angepreßt. Zur besseren Befestigung des Ventilsitzes kann eine Kreisscheibe aus Metall (Stahl) mit einer Mutter am Ventil von außen gegen die Schlauchwand geschraubt werden. Die Schlauchen den werden auf einer Länge von ca. 30 bis 50 mm von innen mit Dimethylformamid bestrichen und mit einem Druck von ca. 2 bar kurze Zeit zusammengedrückt.

Beispiel 2

Es wird wie in Beispiel 1 verfahren, jedoch wird ein thermoplastisches Polyurethan eingesetzt, das aus Hexandiolpolycarbonat mit einem Molekulargewicht von 2000, einem linearen Polypropylenglykol mit etwa dem gleichen Durchschnittsmolekulargewicht, Butandiol-(1,4) und 4,4'-Diisocyanatodiphenylmethan aufgebaut ist und eine Shore A Härte von 87 und eine Zugfestigkeit von 29 MPa hat. Die Extrusionsbedingungen sind Tabelle 1 zu entnehmen.

Das Ventil wird ohne Verklebung mit Hilfe von 2 Gummischeiben und einer Schraubmutter, wobei die Schichten in folgender Reihenfolge übereinander liegen : Ventilfluß, Gummischeibe, Schlauchwand, Gummischeibe, Mutter, luftdicht eingebaut. Die beiden Enden des 2,35 m langen Schlauchstücks werden zwischen 2 auf 160 °C erhitzten Platten auf einer Länge von 30 mm bei einem Druck von 0,5 bis 1 bar 45 Sekunden zusammengepreßt und anschließend mit einer Schere abgerundet.

Beispiel 3

Es wird wie in Beispiel 1 beschrieben verfahren, jedoch wird ein Polyurethanharnstoff aus dem im Beispiel 2 beschriebenen Hexandiolpolycarbonat, 4,4'-Diaminodicyclohexylmethan und Isophorondiisocyanat mit einer Shore A Härte von 90 und einer Zugfestigkeit von 47 MPa eingesetzt. Die gewählten Extrusionsbedingungen sind in Tabelle 1 aufgeführt.

Das Schlauchstück wird wie in Beispiel 1 beschrieben hergestellt, jedoch wird als Lösungsmittel eine Mischung aus Toluol, Isopropanol und Ethylenglykolmonoethyleter (Gewichtsverhältnisse (3 : 3,5 : 1) verwendet.

Tabelle 1

Extrusionsbedingungen

| Produkt aus Beispiel | 1 | 2 | 3 |
|---|---|---|---|
| Zylindertemperaturen in Förderrichtung /°C/ | | | |
| Heizzone 1 | 195 | 190 | 210 |
| Heizzone 2 | 185 | 195 | 220 |
| Heizzone 3 | 180 | 205 | 225 |
| Düse | 180 | 195 | 215 |
| Drehzahl (min) | 25 | 30 | 25 |
| Ausstoß (g/min) | 48 | 50 | 55 |
| Wandstärke des Schlauchs (mm) | 0,25 | 0,4 | 0,2 |

Relative Durchstoßfestigkeit

Ein 35 mm Breiter rechteckiger Streifen des zu prüfenden Produkts wird über 2 Umlenkwalzen mit einem Achsabstand von 465 mm an beiden Enden mit je einem 20 kg Gewicht belastet.

Die in der Mitte des Prüfstreifens aufgesetzte Spitze eines Hakens wird mit einer Federwaage mit ca. 700 mm/min Geschwindigkeit gleichmäßig nach unten gezogen. Gemessen wird die Kraft, bei der die Spitze den Prüfkörper durchdringt. Alle Prüfkörper werden mit der gleichen Spitze beansprucht. Die Messung gestattet nur relative Aussagen und wird auf Butylkautschuk als Standard bezogen.

Tabelle 2

| Produkt | Wanddicke (mm) | Mittelwert der Durchstoßfestigkeit (N) | relative Durchstoßfestigkeit |
|---|---|---|---|
| Butylkautschuk | 1,84 | 83 | 1 per def. |
| Produkt aus Beispiel 1 | 1,79 | > 245 | > 3 |
| Produkt aus Beispiel 1 | 0,80 | 183 | ca. 5 |
| Produkt aus Beispiel 1 | 0,40 | 109 | ca. 6 |
| Produkt aus Beispiel 2 | 1,05 | 148 | ca. 3 |

**Patentansprüche**

1. Aufblasbarer Schlauch für Luftreifen, ausgebildet als Schlauchstück mit beidseitig dichten Enden, wobei die Länge des Schlauchstückes mindestens gleich dem Umfang der Radfelge ist, dadurch gekennzeichnet, daß der Schlauch aus einem thermoplastischen Elastomeren mit einer Shore A Härte (nach DIN 53 505) von höchstens 96 und einer Zugfestigkeit (nach DIN 53 504) von mindestens 25 MPa besteht und im Falle eines thermoplastischen Polyurethan- oder Polyurethanharnstoff-Elastomeren aufgebaut ist aus

a) mindestens einer langkettigen Verbindung mit im Mittel mindestens 1,8 zerewitinoffaktiven Wasserstoffatomen und einem Molekulargewicht von 400 bis 10 000,

b) mindestens einer zwei zerewitinoffaktive Wasserstoffatome enthaltenden Verbindung vom Molekulargewicht 32 bis 400 und/oder Wasser und

c) mindestens einem aliphatischen, cycloaliphatischen, araliphatischen, aromatischen und/oder heterocyclischen Diisocyanat,

wobei das Verhältnis der NCO-Gruppen zu den zerewitinoffaktiven Wasserstoffatomen zwischen 0,97 und 1,03 liegt.

2. Aufblasbarer Schlauch nach Anspruch 1, dadurch gekennzeichnet, daß das thermoplastische Elastomer ein Ether-, Carbonsäure-Ester-, Amid-, Urethan- und/oder Harnstoffgruppen enthaltendes thermoplastisches Elastomer ist.

3. Aufblasbarer Schlauch nach Ansprüchen 1 und 2 dadurch gekennzeichnet, daß das Ventil an einer Stelle eingebaut ist, an der sich die Schlauchenden im Reifen im eingebauten Zustand überlappen.

4. Schlauchstück nach Ansprüchen 1 bis 3, dadurch gekennzeichnet, daß der Schlauchdurchmesser im nichtaufgeblasenen Zustand größer ist als der innere Durchmesser des Reifenmantels.

**Claims**

1. Inflatable tube for pneumatic tyres, in the form of a length of tube, both ends of which are sealed and which is at least as long as the circumference of the wheel rim, characterised in that the tube consists of a thermoplastic elastomer with a Shore A hardness (according to DIN 53,505) of at most 96 and a tensile strength (according to DIN 53,504) of at least 25 MPa and, in the case of a thermoplastic polyurethane or polyurethane urea elastomer, is composed of

a) at least one long-chain compound having on average at least 1.8 zerewitinoff-active hydrogen atoms and a molecular weight of 400 to 10,000.

b) at least one compound containing two zerewitinoff-active hydrogen atoms and having a molecular weight of 32 to 400 and/or water and

c) at least one aliphatic, cycloaliphatic, araliphatic, aromatic and/or heterocyclic diisocyanate, the ratio of the NCO groups to the zerewitinoff-active hydrogen atoms being between 0.97 and 1.03.

2. Inflatable tube according to Claim 1, characterised in that the thermoplastic elastomer is a thermoplastic elastomer containing ether, carboxylic acid ester, amide, urethane and/or urea groups.

3. Inflatable tube according to Claims 1 and 2, characterised in that the valve is fitted in a place where the tube ends overlap in the tyre in the inserted state.

4. Tube length according to Claims 1 to 3, characterised in that the tube diameter in the non-inflated state is greater that the internal diameter of the tyre casing.

**Revendications**

1. Boyau gonflable pour pneumatiques, constitué sous la forme d'un morceau de boyau avec extrémités étanches des deux côtés, la longueur du morceau de boyau étant au moins égale à la périphérie de la jante de la roue, caractérisé en ce que le boyau consiste en un élastomère thermoplastique ayant une dureté Shore A (selon la norme DIN 53 505) au plus de 96 et une résistance à la traction (selon la norme DIN 53 504) d'au moins 25 MPa et, en ce que dans le cas d'un élastomère thermoplastique de polyuréthane ou de polyuréthane-urée, il est composé

a) d'au moins un composé à longue chaîne avec en moyenne au moins 1,8 atome d'hydrogène actif selon Zéréwitinoff et un poids moléculaire de 400 à 10 000,

b) d'au moins un composé contenant deux atomes d'hydrogène actifs selon Zéréwitinoff, d'un poids moléculaire de 32 à 400 et/ou d'eau et

c) d'au moins un diisocyanate aliphatique, cycloaliphatique, araliphatique, aromatique et/ou hétérocyclique,

le rapport des groupes NCO envers les atomes d'hydrogène actifs selon Zéréwitinoff étant compris entre 0,97 et 1,03.

2. Boyau gonflable selon la revendication 1, caractérisé en ce que l'élastomère thermoplastique est un élastomère thermoplastique contenant des groupes éther, ester d'acide carboxylique, amide, uréthane et/ou urée.

3. Boyau gonflable selon les revendications 1 et 2, caractérisé en ce que la soupape est incorporée à un endroit où les extrémités du boyau se chevauchent lorsqu'il est incorporé dans le pneu.

4. Morceau de boyau selon les revendications 1 à 3, caractérisé en ce que le diamètre du boyau à l'état non gonflé est supérieur au diamètre intérieur de l'enveloppe du pneu.

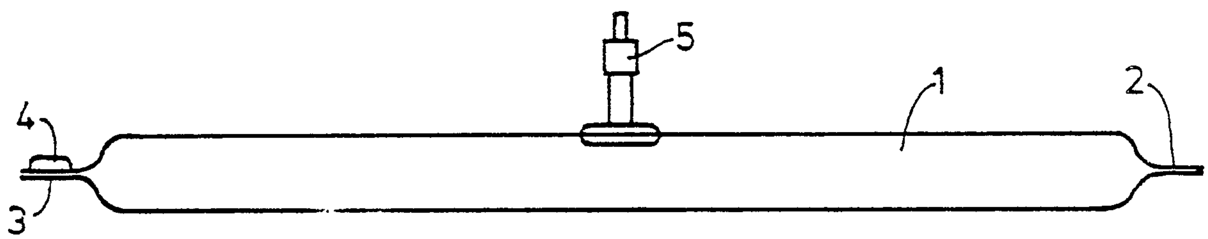


FIG. 1